# EUROPEAN PATENT APPLICATION

(11) **EP 3 366 144 A1**
(43) Date of publication of application: **29.08.2018**
(21) Application number: 17157951.9
(22) Date of filing: 24.02.2017
(51) Int. Cl.: A23C 20/02

(54) **METHOD OF PREPARING A VEGAN CHEESE**

(71) Applicant: Sympli good food bvba, 8310 Brugge (BE)
(72) Inventor: IRUTHAYATHASAN, Emmanuel Emylyanus, 3000 Leuven (BE); LAHOUSSE, Bernard, 8500 Kortrijk (BE)
(74) Representative: BiiP cvba

(57) **Abstract**

The present invention discloses a method for preparation of a vegan cheese. The method includes obtaining a non-dairy milk and / or emulsion. The method further includes curdling the non-dairy milk / emulsion using at-least one plant-origin rennet to form a curd. Thereafter, the curd is ripened to obtain the vegan cheese. Optionally, the method further includes a step of processing the curd before ripening the curd.

## Description

### TECHNICAL FIELD

The present disclosure generally relates to a non-dairy cheese and more particularly relates to a method of preparing a vegan cheese.

### BACKGROUND

Recently, there has been a significant rise in the demand for cheese, generally, as well as for cheeses with specific performance or nutritional characteristics. This surge in demand of cheese is greatly driven by the steady growth in the consumption of fast food and other readymade meal within the food industry since cheese is an important ingredient in most of such foods. Examples of such food include pizza, sandwiches, and various other "cheese foods" requiring various kind of cheese such as mozzarella cheese, bulk cheddar, American cheese, American singles, Velveeta, and Cheese Whiz, and the like.

Traditionally, cheese had mainly been prepared by using dairy based milk as the major ingredient. Such cheeses are made from curds formed from dairy based milk. Generally such curd from the dairy milk is prepared by adding some curdling agent /coagulant to dairy milk. Typically, a rennet had been used as the final curdling agent. Further, other agents such as acid (e.g., lemon juice, vinegar, etc.) or a combination of heat and acid and inorganic salts such as CaCl2 are used to facilitate the curdling process. For example citric acid increases the acidity of the milk to facilitate the curdling process in making some types of cheeses. CaCl2 helps to thicken the curd. The quality of cheese greatly depends upon the strength of curd and is therefore a very important factor in preparation of the cheese.

However, recently due to many reasons such as religious reasons, increase in trending vegan culture, and due to cost consideration of expensive dairy-milk based cheese - there have been significant efforts for the development of cheese replicas / substitutes which while being cost effective, also offer various health advantages.

Such an impetus resulted in development of cheese replicas made principally of non-dairy ingredients. One such example of non-dairy cheese replica includes a cheese preparation technique in which casein is used. However, casein itself being a dairy product, cheese replicas thus formed are not ideal non-dairy cheese replicas.

In some other instances, a transglutaminase enzyme had been used for the curdling of cheese (See WO2013010037 or WO2014110540). However, most of the available transglutaminase (such as "Ajinomoto" brand) contains sodium caseinate, which is itself a dairy product and is therefore not preferred.

In another instances, the non-dairy milk such as nut milks were thickened or jelled using complex carbohydrates such as starch or sugar in various forms such for example as a gelling agent. However, such cheese replicas made from nut milks have unfavorable effects on the texture, resulting in a product with a grainy mouth-feel and lacking the creaminess of dairy cheeses. Further, such cheese replicas inherits relatively high carbohydrate content, thereby making them undesirable be consumed by the consumers who may want to keep their carbohydrate intake to a low limit.

Some commercially available non-dairy cheese replicas use animal origin rennet (which is not considered a dairy ingredient) for curdling the non-dairy milk. However, since such rennet originated from animals, these cheese replicas are not acceptable to most consumers willing to consume truly vegan products.

The aforementioned variants of cheese replicas, apart from some of them not being truly vegan and some of them being vegan but requiring additives which are traditionally not used in cheese making, also do not provide desired cheese characteristics of texture, taste flavors or aroma very similar to dairy cheese.

Accordingly, there is a need in the art for an improved method for producing non-dairy cheese replicas which, while adequately replicating the taste, aroma and other desirable properties of dairy cheeses, are truly vegan too and do not require additives which are not traditionally used in cheese making.

### SUMMARY

In one aspect of the present disclosure, a method for preparation of a vegan cheese is provided. The method includes obtaining a non-dairy milk and / or emulsion. The method further includes curdling the non-dairy milk / emulsion using at-least one plant-origin rennet to form a curd. Thereafter, the curd is ripened to obtain the vegan cheese.

To the contrary of general perception that vegan cheese cannot be produced by using the classic diary cheese making method it was now surprisingly found that vegan cheeses can indeed be produced by using the classic cheese producing method and using plant origin protein source and plant origin rennets.

Optionally, the method includes processing the curd before undertaking the step of ripening of curd.

Further optionally, the processing the curd includes cooking the curd to a temperature ranging from 55°C to 70°C and thereafter draining the whey out of the curd for a time period ranging between 12 hours and 36 hours.

Yet optionally, the processing the curd includes moluding the curd in a mould of predetermined shape and size, thereby imparting a corresponding shape and size to the curd forms.

Yet further optionally, the processing the curd includes soaking the curd in a brining solution.

Yet further optionally, the step of processing the curd includes applying a solution of Penicillium candidum neige mould on the curd.

Preferably, the non-dairy milk is prepared from plant sources such as fruits, vegetables, kernels, flowers, seeds or the like. In the instances in which attempts were made to use plant origin protein source as milk/emulsion (see patent references mentioned earlier) mostly nuts and seed grains were used as plant origin protein sources. However, surprisingly we have found now that excellent vegan cheeses may be produced from vegetables (leaves, stems flowers and tubers), seeds, and fruits. Despite the original inherent strong small, odour and fibrous texture of fruits and vegetables we managed to transform them into vegan cheeses that are devoid of the original strong smell, odour or texture of the starting plant origin materials. For example very strong smelling fruits durian, jungle mango mawang and jack fruit and vegetable kale were converted into vegan cheeses with soft and smooth smell, taste, flavour and texture. We also proved coconut milk can be transformed into a vegan cheese product almost indistinguishable from goat milk cheese.

In an embodiment, the plant-origin rennet is a rennet obtained from dried plant sources. In particular embodiments, these dried plant sources may be selected from artichoke, thistles, fig plant and fruit (more specifically fig plant latex, fig plant stems, dried fig fruits), mulberry (more specifically dried mulberry stems), or Moringa (more specifically dried Moringa fruit skin, dried Moringa fruit pulp and Moringa plant bark), Sodom apple Calotropis procera, sodom apple Calotropis gigantea, Solanum dubium Fresen, Indian spurge tree (Eupphorbia neriifolia), Bodhi tree (Ficus religiosa), Indian Banyan tree (Ficus benghalensis), Indian fig tree/cluster fig tree (Ficus racemosa), Nettle (Urica dioca), Lettuce (Latuca sativa), Soy bean Glycine max, Pumpkin (Curcubita pepo), Red star thistle (Centaurea calitrapa), Dandelion (Taraxacum officinale), and Rosy periwinkle/ Madagascar periwinkle (Vinga rosea/Catharanthus roseus).

Optionally, the curdling of the non-dairy milk emulsion includes adding an inorganic salt to the non-dairy milk emulsion, followed by addition of a starting culture and the plant rennet. The starter culture may be formed by a combination of bacteria, one or more bacteria being selected from the group of Streptococcus cremoris, Streptococcus lactis, Streptococcus lactis subsp. Diacelactis and Leuconostic cremoris,

Further optionally, the inorganic salt may be selected from one or more from the group consisting of CaCl2, MgSO4, MgCl2, KNO3, CaSO4, CaCO3, NaHCO3, K2CO3, Ca(OH)2 and NaHPO4.

In another aspect of the present invention, the disclosure provides a method for preparing a plant-origin rennet using various rennet plant sources. The method includes obtaining dried components such as leaves, fruits, stamens, stigmas, or the like from the rennet plant sources. The method further includes powdering the dried components. The powdered dried component is then soaked in an amount of water, preferably a distilled water at a temperature ranging between 37°C and 60°C and stirring for a period ranging between 15 to 30 minutes. The soaked powder is then filtered and refrigerated at a temperature ranging between 0 to 10 for a time period ranging between one week to two weeks. In yet another aspect of the present invention, the disclosure provides a vegan cheese prepared using the method as disclosed above. The vegan cheese thus produced does not include any animal based product / by- product. Further, the vegan cheese thus produced inherits desirable properties such as taste / aroma and mouth-feel similar to the dairy cheese.

The details of one or more implementations are set forth in the accompanying drawings and the description below. Other aspects, features and advantages of the subject matter disclosed herein will be apparent from the description, the drawings, and the claims.

### BRIEF DESCRIPTION OF THE DRAWINGS

FIG. 1 illustrates a flowchart depicting a method for preparing a vegan cheese in accordance with one embodiment of the present disclosure;
FIG. 2 illustrates the step of curdling the non-dairy milk in accordance with one embodiment of the present disclosure;
FIG. 3 illustrates a flowchart depicting the step of preparing a plant-origin rennet for use in preparation of vegan cheese in accordance with one embodiment of the present disclosure;
FIG. 4 illustrates a block diagram depicting the step of processing the curd in accordance with one embodiment of the present disclosure;

### DETAILED DESCRIPTION

As required, an exemplary-only embodiment of the present application is disclosed herein; however, it is to be understood that the disclosed embodiment is merely exemplary of the present disclosure, which may be embodied in various and / or alternative forms. Specific process or methodological details disclosed herein are not to be interpreted as limiting, but merely as a basis for the claims and as a representative basis for teaching one skilled in the art to variously employ the present disclosure in virtually any appropriately detailed processes.

Aspects, advantages and/or other features of the exemplary embodiment of the disclosure will become apparent in view of the following detailed description, which discloses various non-limiting embodiments of the invention. In describing exemplary embodiments, specific terminology is employed for the sake of clarity. However, the embodiments are not intended to be limited to this specific terminology. It is to be understood that each specific portion includes all technical equivalents that operate in a similar manner to accomplish a similar purpose.

Exemplary embodiments may be adapted for many different purposes and are not intended to be limited to the specific exemplary purposes set forth herein. Those skilled in the art would be able to adapt the exemplary-only embodiment of the present disclosure, depending for example, on the intended use of adapted embodiment. Moreover, examples and limitations related therewith brought herein below are intended to be illustrative and not exclusive. Other limitations of the related art will become apparent to those of skill in the art upon a reading of the following specification and a study of the related figures. The invention will be more clearly understood from the following description of the methods thereof, given by way 'of example only with reference to the accompanying drawings. In the descriptions that follow, like numerals represent like elements in all figures. For example, where the numeral (2) is used to refer to a particular element in one figure, the numeral (2) appearing in any other figure refers to the same element.

The present application discloses a method for preparing vegan cheese from non-dairy and specifically a plant based milk. The method includes obtaining a non-dairy milk and / or emulsion preferably from a plant source and curdling it using a plant based rennet. The vegan cheese prepared using the method disclosed in the present invention has excellent melting properties, drawing properties, and has a desired high shelf life and tastes very similar to the classic cheese. It is to be understood that unless otherwise indicated, this invention need not be limited to preparation of vegan cheese. As one of ordinary skill in the art would appreciate, variations of the invention may be applied to other possible uses such as for example preparation of various kind of vegan cheese having different properties, flavors, aroma, properties or the like. Further the method disclosed may also be used for preparing plant based rennet, curdling of non-dairy milk, or the like. Moreover, it should be understood that embodiments of the present invention may be applied in combination with various other food preparing methods for various possible applications. It must also be noted that, as used in this specification and the appended claims, the singular forms "a," "an" and "the" include plural referents unless the context clearly dictates otherwise. Thus, for example, the term "a plant source" is intended to mean a single plant source or a combination of plant sources. Further, the term "controlled", "controlling", "slowly" used interchangeably herein to refer to the manipulation of a method or components of a composition to achieve a desired characteristic or keep said desired characteristic within certain bounds defined by a user. By way of example only, a controlled heating refers to a heating mechanism in which the temperature and conditions of heating are kept within user-defined limits. By way of other example only, adding a controlled amount of bacteria may refer to adding bacterial cultures comprising a known population and/or known amount of bacterial strains. Similarly, the term "right-choice", "suitable", "appropriate" used interchangeably herein to refer to the manipulation of a method or components of a composition to achieve a desired characteristic or keep said desired characteristic within certain bounds defined by a user. For example "a right choice of bacteria added into the non-dairy milk" refers to any bacteria suitable to be used with the non-dairy milk of specific plant source. Similarly," right choice of rennet added to non-dairy milk" refers to the use of rennet type that has been experimentally tested to be used with the disclosed non-dairy milk type".

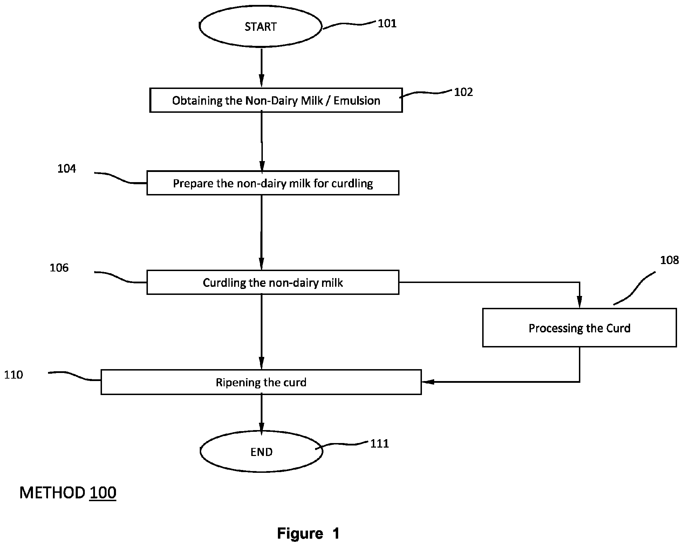

The present invention discloses a method 100 for preparing a vegan cheese, according to an illustrative embodiment as depicted in Fig. 1. The vegan cheese may be described as a cheese "substitute" or "replica" that serves a role as food or in food that is commonly served by traditional dairy cheese. The vegan cheese of the current disclosure is a vegan product that shares visual, olfactory, textural or taste characteristics of cheese such that an ordinary human observer of the product is induced to think of traditional dairy cheese. As illustrated in Fig. 1, the method 100 includes a number of steps, however, sequence of the method steps disclosed hereinafter are exemplary for the sake of understanding the invention for persons skilled in the art. The method 100 starts at step 101 and proceeds to step 102 where an emulsion of non-dairy milk is obtained from various sources. Preferably, the non-dairy milk and / or emulsion is obtained from various plant based sources. In an embodiment of the present invention, the non-dairy milk emulsion may be obtained directly as a liquid from the plant source. In other embodiments, the non-dairy milk / emulsion is prepared using a protein portion of the plant source. In such an embodiment, the protein portion of the plant source is first extracted / obtained from the plant source using various known mechanism as applicable. Thereafter, the protein source is washed and cleaned in sterilized water and optionally in some instances, is first sterilized and then washed in sterilized water in order to get rid of any external contamination of fungi, bacteria, insects, or the like. Thereafter, the protein portion is blended to an emulsion that resembles a milk, using any appropriate tool such as a blender, or the like. Further in such examples, any fibrous material present in the milk is removed using filtering techniques such as centrifugal extraction, fine mess sieve filtering, or the like.

In an embodiment of the present invention, the protein portion may be one or more component of the plant sources such as endosperm flesh, pericarp pulps of fruits, leaf and stem and inflorescence (flower) parts of vegetables, plant tubers, plant bulbs or the like.

In some examples, the plant source for obtaining non-dairy milk may be selected from one or more fruits selected from the group consisting of but not limited to Coconut Coco nucifera, Palmyrah palm fruit, Borassus flabellifer, Jack fruit, Artocarpus heterophyllus, Marang (woolly jack fruit), Artiocarpus odoratisssmus, Durian, Durio zibethinus, Fam. Malvaceae, Mango, Mangifera indica, Avocado, Persea Americana, Tomato, Solanum lycopersicum/Lycopersicon esculentum, Mawang (jungle mango like fruit), Mangifera panjang Kostermans, Dates, Phoenix dactylifera, Dried apricot, Prunus armeniaca, Guava, Psidium guajava, Mulberries, Morus nigra, or the like.

In yet other examples, the plant source for obtaining non-dairy milk may be selected from one or more seeds / kernels selected from the group consisting of but not limited to Chick pea, Cicer arietinum, Rice, Oriza sativa, Finger millet, Eleusine coracana, or the like.

In yet other examples, the plant source for obtaining non-dairy milk may be selected from one or more vegetables from the group consisting of but not limited to Kale, Brassica oleracea, White cabbage, Brassica oleracea var. oleracea, Jerusalem artichoke, Helianthus tuberosus, Artichoke, Cynara cardunculus var. scolymus, Broccoli, Brassica oleracea, White button mushroom, Creeper Spinach, Basella alba, Pumpkin, Curcubita pepo, Sweet corn, Zea mays convar. saccharata var. rugosa, or the like.

The method 100 then proceeds to step 104, where the non-dairy milk obtained from the plant source is brought to a right temperature suitable for curdling. Such a temperature is achieved by heating the non-dairy milk slowly. In some embodiments, the emulsion is heated directly by pouring the emulsion in a pot and putting it directly on electric stove top. In other embodiments, the emulsion is control-heated to a temperature ranging between 75°C and 90°C by putting the pot under hot water bath. Once the emulsion/milk is heated, the emulsion is removed from heating and kept to cool down to a temperature ranging between 45°C to 60°C. Further, pH of the emulsion/ milk is also controlled to a desired level. Once the emulsion achieves a temperature suitable for curdling, the method proceeds to step 106 where the non-dairy milk is curdled using a curdling process 200.

The method 200 starts at step 201 and proceeds to step 202 where one or more inorganic salt is added to the non-dairy milk to start a coagulation thereof. In some embodiments of the present invention, the inorganic salt is a cation salt selected from one or more of the group consisting of but not limited to CaCl2, MgSO4, MgCl2, KNO3, CaSO4, CaCO3, NaHCO3, K2CO3, Ca(OH)2 and NaHPO4. In other embodiments, any suitable coagulating salt may be added to start the coagulation of the non-dairy milk. In some other embodiments, a vinegar may be added to start the coagulation of the non-dairy milk. Optionally, one or more acids such as a citric acid or a lactic acid is added in very small amount to keep the pH level within the desired range. The method 200 then proceeds to step 204, where a predetermined amount of starter culture is added to the non-dairy milk / emulsion. In an embodiment, the amount of starter culture added ranges between of 1 mil to 5 ml per litre of non-dairy milk / emulsion. In other embodiments, any suitable amount of starter culture is added to the non-dairy milk / emulsion. The non-dairy milk / emulsion is then mixed by stirring using a ladle after a wait/rest period or 2 minutes to 5 minutes. Such a wait period rehydrates the starter culture and avoids clumping thereof.

Example of starter culture may include culture formed by different combination of bacteria. In an embodiment, the starter culture is prepared by first preheating the non-dairy milk mixed with a mixture of one or more bacteria to a temperature ranging between.60°C to 70°C. The one or more bacteria may be selected from the group consisting of but not limited to Streptococcus cremoris, Streptococcus lactis, Streptococcus lactis subsp. Diacelactis and Leuconostic cremoris. Thereafter, the mixture is kept at a temperature ranging between 25°C and 37°C for a time period ranging between 24 and 36 hours. Thereafter, the mixture is refrigerated at a temperature ranging between 2°C and 10°C for a time period ranging between 10 and 20 hours to obtain the ripened starter culture.

Once the starter culture is added to the non-dairy milk / emulsion, the method proceeds to the step 206 where a plant-origin rennet is added to non-dairy milk / emulsion. Thereafter, the plant-origin rennet is thoroughly mixed with the non-dairy milk using a stirrer so as to spread the enzymes of the rennet and to facilitate enzymatic curdling of the non-dairy milk. The stirring is thorough but only brief and after stirring the milk container is kept undisturbed without moving until the non-dairy milk is completely coagulated and curdled. The plant origin rennet is chosen according to its applicability on the non-dairy milk / emulsion. Such an addition of the plant-origin rennet results in a proper and complete curdling of the non-dairy milk.

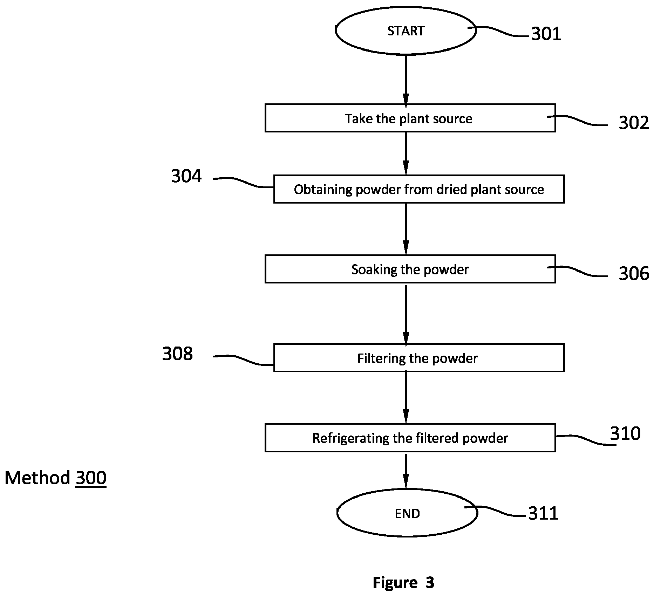

In an embodiment of the present invention, as illustrated in Fig. 3, a method 300 for preparation of plant origin rennet is disclosed. The method 300 starts at step 301 and proceeds to step 302 where dried components such as leaves, fruits, stamens, or the like from the plant rennet sources is obtained. The method 300 then proceeds to step 304 where the dried components of the plant rennet source are powdered using any suitable tool such as powdering mill. Thereafter, at step 306, the powdered dried component of plant rennet source is soaked in an amount of water, preferably a sterilised distilled water of a temperature 53°C and briefly but thoroughly stirred and after stirring kept still for a period ranging between 15 minutes. After 15 minutes of soaking the solution is filtered (308D with a fine mess sieve and the filtrate liquid either soon after used as plant rennet for curdling the plant origin emulsion/ pulp/ milk or as shown in step 310, is refrigerated at 6°C for a time period ranging between one week to two weeks and / or until it is used for curdling the non-dairy milk.

In particular embodiments, the plant-origin rennet is a rennet obtained from plant sources selected from artichoke, thistles and fig plant (more specifically fig plant latex, fig plant stems, dried fig fruits), mulberry (more specifically dried mulberry stems), or Moringa (more specifically dried Moringa fruit skin, dried Moringa fruit pulp and Moringa plant bark).

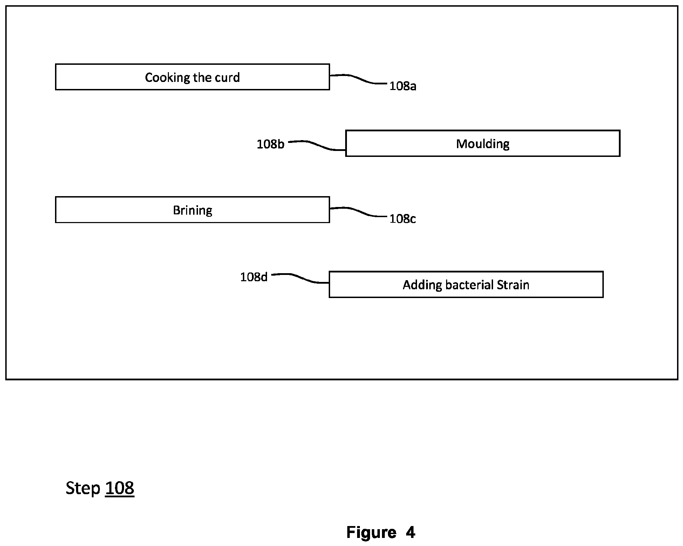

Looping back to the method 100, once the non-dairy milk is curdled at step 106, in some embodiment of the present inventions, the method 100 proceeds to an optional step 108 where the curd obtained from step 106 is proceed using a number of processes as illustrated in Fig. 4. Such processes may be performed sequentially in any desired order.

In one example, the step 108 of processing includes a step 108a where cooking of the curd is performed at a desired temperature, generally ranging between 55°C and 70°C and thereafter under a refrigerator temperature of 6°C to 12°C draining the whey out of the curd is performed for a time period ranging between 12 hours and 36 hours depending on the plant source of non-dairy milk. The step 108 of processing the curd further includes a step 108b where molding of the curd into forms is done. In such a step, the curd is kept on a mould of a predetermined shape and size thereby moulding the curd into a desired formed as according to the shape and size of the mould. In an embodiment, the mould may be made of a stainless steel having a cubical slots of a predetermined size thereby, facilitating a moulding of the curd into cubes of equal sizes. In other embodiments, the mould may be made of any suitable material having any desired shape such as cubic, spherical, or the like. The step 108b is generally performed sequentially after the cooking of curd thereby allowing the curd to keep draining the excess whey after being poured into the mould and kept for draining under refrigerator temperature.

The step 108 of processing the curd further includes a step 108c of brining the moulded curd. In such a step, the curd is dipped and soaked in a brining solution for a time period ranging between 1 minute and 5 minutes, depending upon the type of brining solution and the cheese type. In an embodiment of present invention, the brining solution may include mainly sea salt and very small amount of CaCl2 and very small amount of white vinegar. In some soft cheese types instead of brining the curd an appropriate small amount of sea salt is sprinkled on top of the curd either during draining and moulding or after being drained and moulded.

The step 108 of processing the curd further includes a step 108d addition of a one or more bacterial strain and moulding fungal strain for providing one or more enhanced properties to the cheese to be produced. Here "mould" refers to the inoculating fungus and not metal form-mould to get the right shape of the cheese. In a preferred embodiment, the fungal strain comprises a predetermined amount of a Penicillium camber strain such as Penicillium candidum Neige mould which when added, provides a desired white rind colour to the surface of the vegan cheese. The Penicillium camber strain may be used in combination with one or more other strains to provide additional properties to the vegan cheese produced. For example, in some instances, the Penicillium candidum Neige is used in combination with Geotrichum Candidum to avoid slippage of top skin from the surface of the finished cheese. In some other embodiments, a bacterial strain of Brevibacterium linens is added instead of the fungus Penicillium candidum Neige. The addition of Brevibacterium linens provides a desired red, orange or yellow rind formation. Further, it also provides other benefits such as imparting a flavour from outside surface of the cheese to inside, preventing the growth of many harmful pathogenic bacteria specially Listeria monocytogenes and other fungi. In some other embodiments both the fungus strain Penicillium candidum Neige and bacterial strain Brevibacterium linens are added to get the right flavour, taste and also the rind colour of the finished ripened cheese.

The step 108c is generally performed sequentially after the molding of the cheese. In some embodiments, the step of addition of Penicillium camber strain may be performed sequentially after the step of brining the curd. In some other embodiments, the step of addition of Penicillium camber strain alone or also with the addition of Brevibacterium linens together may be performed along with the addition of starter culture so as to inherit a flavor / color to the cheese formed. In some embodiments only Brevibacterium linens without fungus strain Penicillium camber is added along with the addition of starter culture so as to inherit a flavour/ colour to the cheese formed.

In some other embodiments, in which the step 108 of processing the curd is not performed, the method proceeds directly to step 110 from the step 106. At step 110, the curd obtained is ripened to obtain the desired vegan cheese. The ripening may be performed using any known mechanism currently used to ripen the curd. In an embodiment of the present invention, ripening is performed by simply putting the curd at a predetermined temperature range for a time period ranging between 4 days to 2 months thereby allowing the curd to ripen and turn into the cheese.

### Examples

### Example 1 - Preparation of rennet using Artichoke species Cynara cardunculus Var. scolymus rennet

### Step 1: Take Different parts of the Cynara cardunculus Var. scolymus plant

- Stamens and stigmas of the open flowers are collected before its pollination takes place.
- Calyx and Bracts of the flowers are also collected
- leaves with tender stem are also collected.

The collected parts are thoroughly examined for presence of any insects, fungi, any foreign material, soil particles or plant disease symptoms. Only healthy and cleans parts are selected for the preparation of the rennet.

### Step 2: Drying the collected parts

The collected parts of the Cynara cardunculus Var. scolymus plant are dried either on the laboratory table or otherwise slowly dried under oven temperature of 53°C for 36 hours. During heating it is ensured that the protease enzyme present in the collected parts are not deactivated or destroyed by high temperature. The dried parts are then stored in clean sterile glass bottles.

### Step 3: Powdering the Dried Parts

The dried parts of the Cynara cardunculus Var. scolymus plant are powdered using any suitable tool such as powdering mill.

### Step 4: Soaking the Powder

The powdered dried component of plant rennet source is soaked in sterilised distilled water of a temperature of 53°C and is stirred briefly but thoroughly and kept still without any stirring for 15 minutes. The solution is then filtered with a fine mess sieve to get the filtrate liquid which is the "rennet".

### Step 5: Refrigerating the solution filtrate liquid rennet

The solution filtrate liquid part which is the rennet obtained from the parts of the Cynara cardunculus Var. scolymus plant is either immediately used or refrigerated at a temperature of 6°C for two weeks until use.

Result: - The Rennet thus produced is effective up to 2 to 3 weeks if stored under 6°C refrigerator temperature.

### Example 2 - Preparation of rennet using Thistle species Carduus acanthoides, spiny plumeless thistle belonging to Family Asteraceae Sub family Carduoideae, tribe Cyanreae.

### Step 1: Take Different parts of the Carduus acanthoides, spiny plumeless thistle

- Stamens of the open flowers of the mentioned thistle are collected before its pollination takes place.
- leaves of the mentioned thistles are also collected.

The collected stamens and leaves are thoroughly examined for presence of any insects, fungi, any foreign material, soil particles or plant disease symptoms.

### Step 2: Drying the collected parts

The collected stamens and leaves of the Carduus acanthoides, spiny plumeless thistle are dried either on the laboratory table or otherwise slowly dried under oven temperature of 53°C for 36 hours. The dried parts are then stored in clean sterile glass bottles.

### Step 3: Powdering the Dried Parts

The dried parts of the Carduus acanthoides, spiny plumeless thistle are powdered using any suitable tool such as powdering mill.

### Step 4: Soaking the Powder

The powdered dried component of plant rennet source is soaked in sterilised distilled water of a temperature of 53°C and is briefly but thoroughly stirred and kept still without any stirring for 15 minutes. The solution is then filtered with a fine mess sieve to get the filtrate liquid which is the "rennet".

### Step 5: Refrigerating solution filtrate liquid

The solution filtrate liquid part which is the rennet obtained from the parts of the Carduus acanthoides, spiny plumeless thistle plant is either immediately used or refrigerated at a temperature of 6°C for two weeks until use.

Result: - The Rennet thus produced is effective up to 2 to 3 weeks if stored under 6°C refrigerator temperature. The same method and condition was used to prepare a rennet mashland thistle / European swamp thistle from Family Asteraceae of tribe Cyanreae.

### Example 3 - Preparation of rennet using fig Ficus carica belonging to Family Moraceae of Tribe Ficeae

### Step 1: Take Latex of the fig Ficus carica

Latex is collected directly from fig plant by making an incision on branches and also at the point when leaf petiole is plucked from the branches and dripping latex is collected in clean sterile vials. This fresh latex is either immediately used as rennet or stored in the refrigerator up to 3 days until use. Also stem cuttings and young fruits are collected from the plants to collect latex rennet.

### Step 2: Drying the collected parts

Cut stems are dried slowly under room temperature or oven dried at 53°C in oven for 36 hours. Dried stems are stored in closed containers. Also young immature fruits are sliced and dried either at room temperature or oven dried at 53°C in oven for 36 hours and stored in glass bottles until use for rennet making.

### Step 3: Rennet making from fig stem cuttings.

When rennet needed the dried stem cuttings are soaked in sterile distilled water and bark of the stem is rubbed to extract the latex and latex is stored in sterile vials under refrigeration at 6°C until use.

### Step 4: Rennet making from young fig fruits

Young dried fruits are powdered by a mill when rennet needed.

### Step 5: Soaking fig young fruit powder

Powdered fig young dry fruits soaked in warm sterilized distilled water of 53°C and stirred briefly but thoroughly and after stirring kept still for 15 minutes and filtered with a sieve to get the filtrate liquid rennet. The filtrate liquid rennet is either immediately used or stored in refrigerator at 6°C until use up to 5 days.

Result: - The Rennet thus produced is effective up to 5 days if stored under 6°C refrigerator temperature.

### Example 4 - Preparation of rennet using Moringa/Murunga plant and fruit.

### Step 1: Take Different parts of the Moringa/Murunga

- Outer green skin of the washed clean fruits is collected.
- Inner pulp of the Moringa/Murunga fruit is also collected.
- Bark from the mature branches is also collected.

The collected parts are thoroughly examined for presence of any insects, fungi, any foreign material, soil particles or plant disease symptoms. Only healthy and cleans parts are selected for the preparation of the rennet.

### Step 2: Drying the collected parts

- The collected outer skin of the Moringa/Murunga fruit are slowly dried on the laboratory table under room temperature.
- The collected inner pulp of the Moringa/Murunga fruit are dried either on the laboratory table or otherwise slowly dried under oven at a temperature 53°C for 36 hours.
- The collected bark from the mature branches of the Moringa/Murunga fruit are dried either on the laboratory table under room temperature or dried under oven temperature of 53°C.

The dried parts are separately stored in a sterile glass bottle for use in preparation of rennet.

### Step 3: Powdering the Dried Parts

The mixed dried parts of the Moringa/Murunga fruit are powdered using any suitable tool such as powdering mill.

### Step 4: Soaking the Powder

Powdered Moringa parts is soaked in warm sterilized distilled water of 53°C and stirred briefly but thoroughly and after stirring kept still for 15 minutes and filtered with a sieve to get the filtrate liquid rennet. The filtered liquid rennet is either immediately used or stored in refrigerator at 6°C until use up to 5 days.

### Step 5: Refrigerating the filtrate rennet

The filtrate rennet is stored in refrigerator at 6°C until use up to 5days

Result: - The Rennet thus produced is effective up to 5 days if stored under 6°C refrigerator temperature.

### Example 5 - Preparation of rennet using Mulberry, Genus Morus, Species Morus nigra belonging to Family Moraceae, Tribe Moreae

### Step 1: Take Different parts of the Morus nigra Plant

- Stem of the Morus Nigra plant is cut and collected

### Step 2: Drying the collected parts

The collected stem cuttings of the Morus nigra are dried either on the laboratory table slowly dried under room temperature or dried under oven temperature of 53°C for 36 hours and stored in closed containers until use

### Step 3: Powdering the Dried Parts

The dried stem of the Morus nigra is powdered using any suitable tool such as powdering mill.

### Step 4: Soaking the Powder or rubbing the dried stem cuttings

When rennet needed dried stem cuttings are soaked in sterile water and rubbed to get extract for rennet. Also dried stem cuttings are powdered to soak in sterile water to extract rennet.

### Step 5: Refrigerating the extracted rennet

The Rennet thus produced is either immediately used or stored under refrigerator temperature 6°C effective up to 2 to 3 weeks.

Result: - The Rennet thus produced can be immediately used or effective up to 2 to 3 weeks if stored under 6°C refrigerator temperature.

### Example 6 - Production of goat cheese like vegan cheese from pure coconut milk as the plant base material:

### Step 1: Obtaining Rightly Matured Coconut

The rightly matured coconut is collected and is then checked for purity and a great care is taken not to collect the coconut that is either spoiled, fermented, or that may be contaminated with any microbe, insect fungi, or the like Step 2: Prepare Coconut Milk

The mature coconut is opened by cut opening the de-husked coconut with shell intact. Each coconut is again checked for purity. The coconut meat must be pure white without any colouration (indication of already fungal presence) or rancid smell or pungent pulps or gases when cut opened. Once the purity of the coconut meat is ensured, the coconut white meat is shredded mechanically into fine thin shreds. The shredded coconut meat is then blended in a blender with addition of right limited amount of water and resulting pulp was squeezed and filtered to get a pure white clean milk without any fibrous particle.

### Step 3: Preparing the Coconut Milk for curdling:-

The coconut milk is first heated to reach a temperature of 70°C. Thereafter the milk is allowed to cool down to a temperature of 37°C

### Step 3: Curdling the Coconut Milk:-

Right amount of CaCl₂ and a beneficial bacterial culture of our choice and a beneficial fungi were added to coconut milk and then after prior testing rightly chosen plant rennet namely from Cynara species was added as well. The coagulating and curdling of the milk was reached after 24 hours.

### Step 4: Processing and Ripening the Curd:-

Draining of the curds from whey took 12 hours and drained curds were moulded in forms and brined and kept in maturing cabinets. In a separate example, instead of adding mould culture of Penicillium candidum before moulding the curds into form, it was sprayed on the brined cheese curd moulded forms and kept for ripening

Result - Resulting cheese was with very desirable "goat cheese aroma", taste and texture. Also soft fresh goat cheese type and oozy stretching mozzarella were produced.

In some similar examples, the coconut based vegan cheese was prepared using other plant-origin rennets such as plumeless thistle Carduus acanthoides and European swamp thistle Cirsium palustre. However, the cheese produced was very similar to the cheese produced in example 6.
In some similar examples - The same coconut milk cheese was also produced with other bacterial inclusions such as Brevibacterium linens to produce blue cheese, camembert cheese or Herve type cheese.

### Example 7 - Production of Vegan cheese from avocado fruit:

### Step 1: Obtain Rightly Matured avocado fruit

The rightly ripened avocado fruits were collected and then checked for purity. Further, it is assured that no blemished, spoiled, fermented, or contaminated fruit is collected.

### Step 2: Prepare avocado Milk

The collected avocado was cut-opened and the fruit pulp was collected. The fruit pulp was then blended in a blender with addition of right limited amount of water to form a fruit pulp emulsion The emulsion was then squeezed and filtered to remove any fibrous particle.

### Step 3: Curdling the Avocado Milk:-

The emulsion/ avocado milk was heated slowly and right choice of an inorganic salt, a beneficial bacterial culture, and a beneficial fungi were added sequentially. Thereafter, a plant rennet from Cynara species was added to complete the coagulation and curdling.

### Step 4: Processing and Ripening the the Curd:-

Draining of the curds from whey took 12 hours and the drained curds were then moulded in forms and ripened in maturing cabinets.

Result - Resulting cheese was a vegan cheese with unique fruity taste and flavour.

In some similar examples - The same avacado cheese was also produced with other bacterial inclusions to produce blue cheese, camembert cheese or Herve type cheese.

### Example 8 - Production of Vegan cheese from Durian fruit:

### Step 1: Obtain Rightly Ripened Durian Fruit

The rightly ripened durian fruits were collected and then checked for purity. Further, it is assured that no blemished, spoiled, fermented, or contaminated fruit is collected.

### Step 2: Prepare Durian Milk

Clean ripe durian fruit was cut open and the pericarp along with seed was taken out under clean conditions. The pericarp fleshy pulp was carefully removed from the seed and the pulp was used to make the emulsion/milk for cheese making. The fleshy pulp was blended into fine emulsion/milk form with the use of a blender and addition of sterilised clean water while blending produced the right consistence of the emulsion/milk. The emulsion was heated slowly and right choice of inorganic salt and a beneficial bacterial culture and a beneficial fungi were added and followed up by addition of plant rennet from Cynara species. Coagulation and curdling reached after 24 hours and curds were drained from whey for 12 hours and drained curds were moulded in forms and ripened in maturing cabinets. It produced a fruity flavoured but without any trace of strong durian odour cheese with desirable deep orange colour. Also when inoculated with Penicillium Candidum Neige a very attractive pure white rind covered cheese with desirable orange inside cheese colour when cut open.

Same durian cheese was also produced with other bacterial inclusions to produce blue cheese, camembert cheese or Herve type cheese.

### Step 3: Curdling the Durian Milk:-

The emulsion was heated slowly and right choice of inorganic salt and a beneficial bacterial culture and a beneficial fungi were added and followed up by addition of plant rennet from Cynara species. Coagulation and curdling reached after 24 hours and curds were drained from whey for 12 hours and drained curds were moulded in forms and ripened in maturing cabinets. Same durian cheese was also produced with other bacterial inclusions to produce blue cheese, camembert cheese or Herve type cheese.

### Step 4: Processing and Ripening the Curd:

Draining of the curds from whey took 12 hours and the drained curds were then moulded in forms and ripened in maturing cabinets.

Result - It produced a fruity flavoured but without any trace of strong durian odour cheese with desirable deep orange colour. Also when inoculated with Penicillium Candidum Neige a very attractive pure white rind covered cheese with desirable orange inside cheese colour when cut open.

In some similar examples - The same durian cheese was also produced with other bacterial inclusions to produce blue cheese, camembert cheese or Herve type cheese.

### INDUSTRIAL APPLICABILITY

The present disclosure relates to a method 100 for preparing a vegan cheese using non-dairy and specifically, a plant based milk. The method 100 assures a complete and a proper coagulation and curdling of non-dairy milk using plant-source rennet which has earlier not been possible. Accordingly, the method provides a truly vegan cheese which is much preferred by the consumers preferring only vegan food products. The vegan cheese of the current invention may be used in preparing cheese of variety of flavors, colors, and for variety of uses in variety of food types. Further, the cheese produced inherits all the desirable properties such as melt, crumble, stretch, firmness, combinations of these, flavor, aroma, and the like, similar to that of the dairy cheese. Additionally, the method while being very easy to follow is much cheaper to execute and thereby providing high quality dairy cheese alternates at much lower prices. Furthermore, the by-products of vegan cheese production, such as vegan whey, left over plant parts of plant origin (example coconut water, coconut shell, kale residue etc.) are used for various food products such as soft drinks, cocktails, flavour enhancers in cuisine and mineral and vitamin supplements in animal feed.

In another aspect, the present disclosure provides a method 300 for preparing plant based rennet which are able to curdle non-dairy and specifically the plant based milk. Such a method find application wherever the curdling of non-dairy emulsion within in the food industry irrespective of whether being used for cheese formation or not. Again, the rennet is not only vegan but since produced mainly from easily harvestable plant sources, is much cheaper alternative to all other curdling agents. Additionally, the whey produced as a byproduct in vegan cheese production can be used to make soft drinks and animal feed supplements. These serve as a much healthier and cheaper alternative to other soft drinks and supplements. Additionally, waste material of vegetables can be upgraded into cheese e.g. leaves and stems of kale can be completely used. Or waste material reaching their THT could be upgraded.

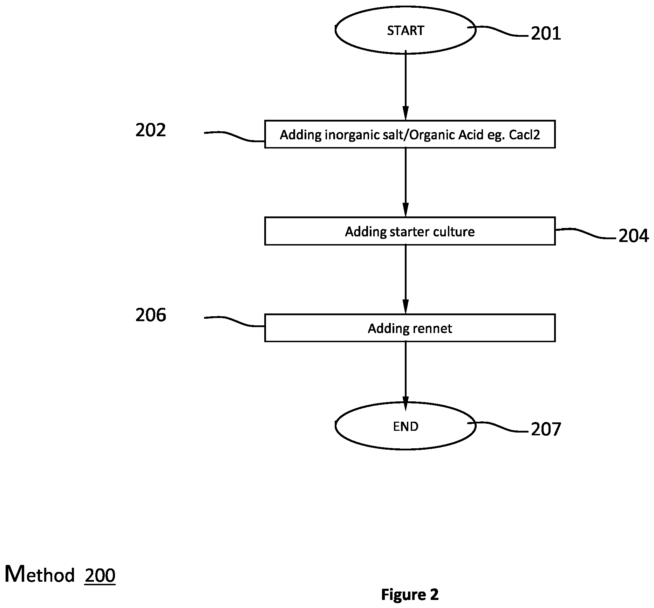

Referring to FIG. 1, 2 and 3, methodology in accordance with a preferred embodiment of the claimed subject matter is illustrated. While, for purposes of simplicity of explanation, the methodology is shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter.

'As will be readily apparent to those skilled in the art, the present invention may easily be produced in other specific forms without departing from its essential characteristics. The present embodiments is, therefore, to be considered as merely illustrative and not restrictive, the scope of the invention being indicated by the claims rather than the foregoing description, and all changes which come within therefore intended to be embraced therein. Many variations, modifications, additions, and improvements are possible. More generally, embodiments in accordance with the present disclosure have been described in the context of preferred embodiments. Functionalities may be separated or combined in procedures differently in various embodiments of the disclosure or described with different terminology. These and other variations, modifications, additions, and improvements may fall within the scope of the disclosure as defined in the appended claims.

## Claims

1. A method for preparing a vegan cheese, the method comprising the steps of:
a) Obtaining a non-dairy milk;
b) curdling the non-dairy milk using at least one plant-origin rennet to obtain a curd;
c) ripening the curd to obtain the non-dairy cheese replica.

2. The method of claim 1, wherein the non-dairy milk is obtained from a plant selected from one of but not limited to the group of fruits consisting of but not limited to Coconut Coco nucifera, Palmyrah palm fruit, Borassus flabellifer, Jack fruit, Artocarpus heterophyllus, Marang (woolly jack fruit), Artiocarpus odoratisssmus, Durian, Durio zibethinus, Fam. Malvaceae, Mango, Mangifera indica, Avocado, Persea americana, Tomato, Solanum lycopersicum/Lycopersicon esculentum, Mawang (jungle mango like fruit), Mangifera panjang Kostermans, Dates, Phoenix dactylifera, Dried apricot, Prunus armeniaca, Guava, Psidium guajava, Mulberries and Morus nigra.

3. The method of claim 1, wherein the non-dairy milk is obtained from a plant selected from one of but not limited to the group of seeds consisting of but not limited to Chick pea, Cicer arietinum, Rice, Oriza sativa, and Finger millet Eleusine coracana.

4. The method of claim 1, wherein the non-dairy milk is obtained from a plant selected from one of but not limited to the group of vegetables consisting of but not limited to Kale, Brassica oleracea, White cabbage, Brassica oleracea var. oleracea, Jerusalem artichoke, Helianthus tuberosus, Artichoke, Cynara cardunculus var. scolymus, Broccoli, Brassica oleracea, White button mushroom, Creeper Spinach, Basella alba, Pumpkin, Curcubita pepo, Sweet corn and Zea mays convar. saccharata var. rugose

5. The method of claim 1, wherein the plant-origin rennet is prepared from a dried plant source selected from artichoke, thistles, fig plant, dried fig fruits, dried mulberry stems, dried Moringa fruit skin and dried Moringa fruit pulp, Sodom apple Calotropis procera, sodom apple Calotropis gigantea, Solanum dubium Fresen, Indian spurge tree (Eupphorbia neriifolia), Bodhi tree (Ficus religiosa), Indian Banyan tree (Ficus benghalensis), Indian fig tree/cluster fig tree (Ficus racemosa), Nettle (Urica dioca), Lettuce (Latuca sativa), Soy bean Glycine max, Pumpkin (Curcubita pepo), Red star thistle (Centaurea calitrapa), Dandelion (Taraxacum officinale), and Rosy periwinkle/ Madagascar periwinkle (Vinga rosea/Catharanthus roseus).

6. The method of claim 1, wherein the curdling comprising the steps of:
a) adding an inorganic salt to the non-dairy milk;
b) inoculating the emulsion with a starter culture, formed by a combination of bacteria, one or more bacteria being selected from the group of Streptococcus cremoris, Streptococcus lactis, Streptococcus lactis subsp. Diacelactis and Leuconostic cremoris,
c) adding a plant-origin rennet

7. The method of claim 6, where in the inorganic salt is a salt suitable for starting coagulation of non-dairy and is selected but not limited to group of inorganic salts consisting of but not limited to CaCl2, MgSO4, MgCl2, KNO3, CaSO4, CaCO3, NaHCO3, K2CO3, Ca(OH)2 and NaHPO4.

8. The method of claim 1, wherein the plant based rennet is prepared by the steps comprising:
a) obtaining a powder of a dried plant source;
b) Soaking the powder of the dried plant source in an amount of warm water
c) Filtering the solution to get filtrate liquid
d) Refrigerating the filtrate liquid.

9. The method of claim 1 optionally comprising the steps of processing the curd before the step of ripening.

10. The method of claim 9, wherein the processing comprising the step of cooking the curd at a temperature ranging between 55°C and 70°C and draining the whey for a time period ranging between 12 hours and 36 hours.

11. The method of claim 9, wherein the processing comprising the step moulding the curd into forms.

12. The method of claim 9, wherein the processing comprising the step of brining the curd by dipping in a brine solution for a time period ranging between 1 minute and 5 minute.

13. The method of claim 9, wherein the processing comprising the step of adding one or more bacterial strains and fungal to the curd.

14. The method of claim 13, wherein the one or more bacterial strain and or fungal strain is selected from but not limited to Penicillium candidum Neige, Geotrichum Candidum and Brevibacterium linens.

15. A non-dairy cheese replica prepared using any of the preceding claims.
